# EUROPÄISCHE PATENTSCHRIFT

(11) **EP 3 775 783 B1**
(45) Veröffentlichungstag und Bekanntmachung des Hinweises auf die Patenterteilung: **05.06.2024**
(21) Anmeldenummer: 19715857.9
(22) Anmeldetag: 27.03.2019
(51) Int. Cl.: G01C 25/00, G05D 1/00, G01C 21/30

(54) **VERFAHREN ZUR KALIBRIERUNG EINES POSITIONSSENSORS IN EINEM FAHRZEUG, COMPUTERPROGRAMM, SPEICHERMITTEL, STEUERGERÄT UND KALIBRIERSTRECKE**
METHOD FOR CALIBRATING A POSITION SENSOR IN A VEHICLE, COMPUTER PROGRAM, STORAGE MEANS, CONTROL DEVICE AND CALIBRATION ROUTE
PROCÉDÉ POUR L'ÉTALONNAGE D'UN CAPTEUR DE POSITION DANS UN VÉHICULE, PROGRAMME INFORMATIQUE, SUPPORT D'ENREGISTREMENT, DISPOSITIF DE COMMANDE ET PARCOURS D'ÉTALONNAGE

(30) Priorität: 04.04.2018 DE 102018205065
(43) Veröffentlichungstag der Anmeldung: 17.02.2021
(73) Patentinhaber: VOLKSWAGEN AKTIENGESELLSCHAFT, 38440 Wolfsburg (DE)
(72) Erfinder: MAX, Stephan, 38518 Gifhorn (DE); ROHLFS, Michael, 38531 Rötgesbüttel (DE)
(86) Internationale Anmeldenummer: PCT/EP2019/057699
(87) Internationale Veröffentlichungsnummer: WO 2019/192905

(56) Entgegenhaltungen:
- EP-A1- 2 597 614
- EP-A2- 2 736 013
- WO-A1-2016/191181
- GB-A- 2 543 251
- US-A1- 2001 006 554
- CHAO GAO ET AL: "On-line calibration of multiple LIDARs on a mobile vehicle platform", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3. Mai 2010 (2010-05-03), Seiten 279-284, XP031743815, ISBN: 978-1-4244-5038-1

## Beschreibung

Die vorliegende Erfindung betrifft ein Verfahren zur Kalibrierung eines Positionssensors in einem Fahrzeug, insbesondere in einem Kraftfahrzeug. Die Erfindung betrifft ferner ein Computerprogramm zum Durchführen eines Kalibrierverfahrens, ein Speichermittel zum Speichern eines Computerprogramms sowie ein Steuergerät mit einem darauf installierten Computerprogramm. Außerdem betrifft die Erfindung eine Kalibrierstrecke.

In modernen Fahrzeugen ist in der Regel eine Vielzahl von Positionssensoren verbaut. Mittels der Positionssensoren können Merkmale aus der Umgebung des Fahrzeugs erfasst und analysiert werden. Abhängig von den erkannten Merkmalen aus der Umgebung des Fahrzeugs kann ein Fahrer des Fahrzeugs informiert oder gewarnt werden. Bei zumindest teilweise autonomen Fahrsystemen kann basierend auf den erkannten Umgebungsinformationen unmittelbar in die Fahrzeugsteuerung eingegriffen werden. Bei einer Funktion wie dem Spurhalteassistenten können so beispielsweise eine Fahrbahnlinie auf der Straße erkannt, der Abstand des Fahrzeugs zu dieser Linie berechnet und ein entsprechender Lenkeingriff durchgeführt werden.

Für eine zuverlässige Funktion solcher Verfahren und Systeme ist es wichtig, die Position und die Orientierung des Positionssensors oder der Positionssensoren im Fahrzeug genau zu kennen. Sind die Einbaupositionen aufgrund von einbautechnisch bedingten Toleranzen innerhalb der Produktion nicht korrekt, führt dies zu Fehlfunktionen der Sensorik. Um dieser Problematik Rechnung zu tragen, werden in den Produktionsanlagen bzw. werksseitig am Herstellungsort des Fahrzeugs Kalibrieranlagen zum Kalibrieren der Positionssensoren aufgebaut. Verfahren zur Kalibrierung von Sensoren eines Kraftfahrzeuges sind bspw. aus der EP 2 597 614 A1, US 2001/006554 A1, der EP 2 763 013 A2 oder der WO 2016/191181 A1 bekannt. Im Rahmen der Kalibrierung werden Fahrzeugposition und -ausrichtung relativ zum Kalibierstand erfasst. Außerdem werden die Position und Ausrichtung der Positionssensoren relativ zum Kalibrierstand erfasst. Basierend auf diesen Informationen können anschließend die Position und Ausrichtung der Positionssensoren relativ zum Fahrzeug berechnet und entsprechend kalibriert werden. Dieses Vorgehen führt allerdings zu einem hohen zeitlichen und somit auch zu einem entsprechend kostenträchtigen Aufwand innerhalb der Produktion des Fahrzeugs.

Ferner besteht der Wunsch, einem Endkunden ein Fahrzeug anbieten zu können, welches eine möglichst vollständig kalibrierte Sensorik aufweist. Ein Anlernen der Sensorik durch den Kunden soll deshalb möglichst vermieden werden.

Aufgabe der vorliegenden Erfindung ist es, der voranstehend beschriebenen Problematik bei der Kalibrierung eines Positionssensors in einem Fahrzeug zumindest teilweise Rechnung zu tragen. Insbesondere ist es Aufgabe der vorliegenden Erfindung, ein Verfahren, ein Computerprogramm, ein Speichermittel mit einem Computerprogramm, ein Steuergerät mit einem darauf installierten Computerprogramm sowie eine Kalibrierstrecke zur einfachen und kostengünstigen Kalibrierung eines Positionssensors in einem Fahrzeug zu schaffen.

Die voranstehende Aufgabe wird durch die Patentansprüche gelöst. Insbesondere wird die voranstehende Aufgabe durch ein Verfahren mit den Merkmalen gemäß Anspruch 1, ein Computerprogramm gemäß Anspruch 6, ein Speichermittel gemäß Anspruch 7, ein Steuergerät gemäß Anspruch 8 sowie eine Kalibrierstrecke mit den Merkmalen gemäß Anspruch 9 gelöst.

Weitere Vorteile der Erfindung ergeben sich aus den Unteransprüchen, der Beschreibung und den Zeichnungen. Dabei gelten Merkmale, die im Zusammenhang mit dem erfindungsgemäßen Verfahren beschrieben sind, selbstverständlich auch im Zusammenhang mit dem erfindungsgemäßen Computerprogramm, dem erfindungsgemäßen Speichermittel, dem erfindungsgemäßen Steuergerät, der erfindungsgemäßen Kalibrierstrecke und jeweils umgekehrt, sodass bezüglich der Offenbarung zu den einzelnen Erfindungsaspekten stets wechselseitig Bezug genommen wird bzw. werden kann.

Gemäß einem ersten Aspekt der vorliegenden Erfindung wird ein Verfahren zur Kalibrierung wenigstens eines Positionssensors in einem Fahrzeug zur Verfügung gestellt. Das Verfahren weist die folgenden Schritte auf:
- Speichern einer Karte in dem Fahrzeug mit wenigstens einer virtuellen Ortsinformation,
- Bewegen des Fahrzeugs auf einer vordefinierten Kalibrierstrecke,
- Erkennen wenigstens einer tatsächlichen Ortsinformation durch den wenigstens einen Positionssensor, während sich das Fahrzeug auf der vordefinierten Kalibrierstrecke bewegt,
- Durchführen eines Vergleichs zwischen der wenigstens einen virtuellen Ortsinformation und der wenigstens einen tatsächlichen Ortsinformation,
- Berechnen einer kartenbasierten Bewegung des Fahrzeugs innerhalb der gespeicherten Karte basierend auf dem Vergleich,
- Berechnen einer odometriebasierten Bewegung des Fahrzeugs, und
- Kalibrierung des wenigstens einen Positionssensors anhand eines Vergleichs zwischen der kartenbasierten Bewegung und der odometriebasierten Bewegung.

Dabei stammt die wenigstens eine virtuelle Ortsinformation aus der Umgebung der vordefinierten Kalibrierstrecke.

Im Rahmen der vorliegenden Erfindung wurde erkannt, dass Verfahren zur Kalibrierung der Sensorik des Fahrzeugs, die bisher nur im freien Gelände angewandt wurden, auch ohne einen zeitlich separaten Fertigungsschritt in den Fertigungsprozess des Fahrzeugs integrierbar sind. Als Kalibrierstrecke wird dabei insbesondere eine Strecke verwendet, die das Fahrzeug im Rahmen der Fertigung am Herstellungsort ohnehin zurücklegen muss. D.h., das Fahrzeug wird vorzugsweise am Herstellungsort des Fahrzeugs auf einer vordefinierten Kalibrierstrecke bewegt, welche der gewöhnlichen Fertigungsstrecke entspricht, also der Strecke, auf welcher theoretisch auch Fahrzeuge ohne Sensorkalibrierung bewegt werden würden. Dadurch können Zeit und somit auch entsprechende Kosten gespart werden. Gleichwohl kann die Kalibrierstrecke auch eine abseits des Herstellungsortes vordefinierte Strecke sein.

Bei einer bevorzugten Ausgestaltungsvariante der vorliegenden Erfindung ist es möglich, dass die Karte in dem Fahrzeug mit wenigstens einer virtuellen Ortsinformation vom Herstellungsort des Fahrzeugs gespeichert wird. Im Rahmen der Erfindung ist vorgesehen, dass das Fahrzeug am Herstellungsort des Fahrzeugs auf der vordefinierten Kalibrierstrecke bewegt wird. Hierbei wird das Fahrzeug erfindungsgemäß während seiner Fertigung auf der vordefinierten Kalibrierstrecke bewegt.

Während der erfindungsgemäßen Kalibrierung ist grundsätzlich kein Mitarbeiter erforderlich, welcher sich um die Kalibrierung auf der Kalibrierstrecke kümmern muss. Auch dies spart Zeit und Kosten.

Ebenso ist zur Durchführung des vorliegenden Verfahrens kein spezielles Equipment erforderlich. Als Ortsinformationen dienen Gegenstände bzw. Umgebungsmerkmale am Herstellungsort bzw. auf der Fertigungsstrecke des Fahrzeugs. Demnach kann das erfindungsgemäße Verfahren besonders einfach ausgeführt, insbesondere besonders einfach in bestehende Prozessabläufe integriert werden.

Die Kalibrierung des wenigstens einen Positionssensors kann eine Bestimmung der Relativposition des wenigstens einen Positionssensors im Fahrzeug umfassen. D.h., im Rahmen der Kalibrierung kann die Position des wenigstens einen Positionssensors relativ zum Rest des Fahrzeugs bestimmt werden. Dadurch können toleranzbedingte Einbaumaße ausgeglichen werden, welche zu fehlerhaften Messungen durch den wenigstens einen Positionssensor führen könnten.

Bei der Kalibrierung des wenigstens einen Positionssensors werden die kartenbasierte Bewegung und die odometriebasierte Bewegung miteinander verglichen und mögliche Unterschiede zwischen den jeweiligen Bewegungen ermittelt. Aus den unterschiedlichen Bewegungen können anschließend mögliche Fehlstellungen des wenigstens einen Positionssensors, die beispielsweise durch Verbauungsungenauigkeiten oder Bauteiltoleranzen verursacht werden, ermittelt werden. Die ermittelten Fehler können anschließend für die Kalibrierung des wenigstens einen Positionssensors genutzt werden.

Unter dem wenigstens einen Positionssensor wird ein Kamerasensor eines Kamerasystems des Fahrzeugs, beispielsweise in Form eines Bildsensors oder ein Abstandssensor, beispielsweise in Form eines Ultraschallsensors, verstanden. Allgemein kann der wenigstens eine Positionssensor als wenigstens ein Positionssensor zur Positionsermittlung des Fahrzeugs verstanden werden.

Unter einer odometriebasierten Bewegung des Fahrzeugs ist eine Bewegung des Fahrzeugs zu verstehen, welche anhand der Fahrzeugodometrie berechnet wird. Unter Odometrie ist vorliegend ein Verfahren zur Ermittlung von Position und/oder Orientierung des Fahrzeugs anhand von Daten eines Vortriebsystems des Fahrzeugs zu verstehen.

Unter einer virtuellen Ortsinformation wird vorliegend eine digitale, im Fahrzeug abgespeicherte Ortsinformation verstanden. Die virtuelle Ortsinformation entspricht möglichst der zu erkennenden tatsächlichen Ortsinformation. Unter der tatsächlichen Ortsinformation ist eine physische Ortsinformation zu verstehen, die durch den wenigstens einen Positionssensor tatsächlich erkannt bzw. gemessen werden kann.

Unter der Kalibrierung ist vorliegend ein Messprozess zur zuverlässig reproduzierbaren Feststellung und Dokumentation einer möglichen Abweichung der kartenbasierten Bewegung, die mittels des wenigstens einen Positionssensors berechnet wird, gegenüber der odometriebasierten Bewegung, die mittels der Odometrie des Fahrzeugs berechnet wird, zu verstehen.

Unter der Karte ist eine digitale Landkarte von zumindest ausgewählten Teilen aus der Umgebung der vordefinierten Kalibrierstrecke zu verstehen. Die Karte kann im Kamerasystem, beispielsweise auf einem Speichermittel des Kamerasystems, gespeichert werden.

Gemäß der vorliegenden Erfindung ist es zudem vorgesehen, dass das Fahrzeug mit einer Zugvorrichtung auf der vordefinierten Kalibrierstrecke gezogen wird. Dadurch kann die odometriebasierte Bewegung besonders genau berechnet bzw. bestimmt werden. Entsprechend genau kann der wenigstens eine Positionssensor kalibriert werden. Ein weiterer Vorteil der Zugvorrichtung ist es, dass keine Person zum Fahren bzw. Bewegen des Fahrzeugs benötigt wird. Dadurch können Kosten gespart werden. Außerdem kann dadurch auf einfache Weise eine besonders genaue Bewegung des Fahrzeugs entlang der Kalibrierstrecke erreicht werden. Die Zugvorrichtung kann einen Zugschlitten, ein Gestänge, ein Seil und/oder eine Kette aufweisen, durch welche das Fahrzeug entlang der vordefinierten Kalibrierstrecke gezogen wird. Der Zugschlitten kann ohne Gestänge, Kette und/oder Seil in Form eines autonomen Zugschlittens bereitgestellt und genutzt werden.

Ferner ist es möglich, dass bei einem Verfahren gemäß der vorliegenden Erfindung die wenigstens eine tatsächliche Ortsinformation in Gravitationsrichtung über dem Fahrzeug erkannt wird. D.h., die wenigstens eine tatsächliche Ortsinformation wird auf bzw. über der Kalibrierstrecke oberhalb bzw. über dem Fahrzeug erkannt. Unter der wenigstens einen tatsächlichen Ortsinformation werden erfindungsgemäß vordefinierte Objekte auf bzw. an der Kalibrierstrecke verstanden. Solche Objekte sind Kalibrierschilder oder -tafeln. Diese Objekte werden vorzugsweise an einer Raumdecke am Herstellungsort des Fahrzeugs über der Kalibrierstrecke angebracht. Dadurch stehen die Objekte anderen Personen oder Fahrzeugen am Herstellungsort des Fahrzeugs nicht im Weg. An einer Raumdecke sind die Objekte außerdem einfach zu montieren. Ferner ist es relativ unwahrscheinlich, dass die Objekte an der Raumdecke durch andere Objekte verdeckt werden und dadurch nicht mehr für die Kalibrierung verwendet werden könnten. Unter der wenigstens einen tatsächlichen Ortsinformation auf der Kalibrierstrecke ist wenigstens eine tatsächliche Ortsinformation auf, an, neben oder über der Kalibrierstrecke zu verstehen, also an einer Position, an welcher die wenigstens eine tatsächliche Ortsinformation von dem wenigstens einen Positionssensor am Fahrzeug, welches sich auf der Kalibrierstrecke bewegt, erkannt bzw. erfasst werden kann.

Außerdem ist es möglich, dass bei einem Verfahren gemäß der vorliegenden Erfindung das Fahrzeug auf der vordefinierten Kalibrierstrecke zumindest teilweise innerhalb eines Gebäudes bewegt wird. Innerhalb eines Gebäudes können die vorstehend erwähnten Objekte besonders einfach über der Kalibrierstrecke montiert werden. Außerdem herrschen innerhalb eines Gebäudes in der Regel gleichmäßige, da wetterunabhängige, Umgebungsbedingungen oder können auf Wunsch relativ einfach geschaffen werden. Dies ist für die Kalibrierung förderlich. Unter dem Gebäude kann beispielsweise eine Werkshalle am Herstellungsort des Fahrzeugs verstanden werden.

Bei einem erfindungsgemäßen Verfahren ist es zudem möglich, dass die Kalibrierung iterativ über eine Mehrzahl von Vergleichen zwischen der kartenbasierten Bewegung und der odometriebasierten Bewegung durchgeführt wird. Dadurch kann eine möglichst robuste Kalibrierung sichergestellt werden. Von Vorteil kann es hierbei sein, wenn mit statistischen Methoden Fehler über eine Vielzahl von Messungen beobachtet und ausgewertet, beispielsweise gemittelt, werden.

Darüber hinaus ist es bei einem Verfahren gemäß der vorliegenden Erfindung möglich, dass die kamerabasierte Bewegung des Fahrzeugs mittels mehrerer Positionssensoren berechnet wird und die Positionssensoren anhand eines Vergleichs zwischen der kartenbasierten Bewegung und der odometriebasierten Bewegung gleichzeitig bzw. gemeinsam kalibriert werden. Bei Versuchen im Rahmen der vorliegenden Erfindung hat sich herausgestellt, dass eine gemeinsame Kalibrierung und eine entsprechende Gesamtbetrachtung mehrerer Messwerte von verschiedenen Positionssensoren stets genauer als die Summe von Einzelergebnissen ist. Darüber hinaus kann dadurch die Kalibrierung für sämtliche Positionssensoren des Fahrzeugs besonders schnell und damit auch kostengünstig erledigt werden. Die gemeinsame Kalibrierung kann mittels Big-Data-Analyse durchgeführt werden, im Rahmen welcher die kartenbasierten und odometriebasierten Daten zumindest teilweise parallel und/oder mittels gegenseitiger Berücksichtigung verarbeitet werden.

Gemäß einem weiteren Aspekt der vorliegenden Erfindung wird ein Computerprogramm zur Verfügung gestellt. Das Computerprogramm umfasst Befehle, die bei der Ausführung des Computerprogramms durch einen Computer diesen veranlassen, das vorstehend im Detail beschriebene Verfahren auszuführen. Damit bringt das erfindungsgemäße Computerprogramm die gleichen Vorteile mit sich, wie sie ausführlich mit Bezug auf das erfindungsgemäße Verfahren beschrieben worden sind.

Das Computerprogramm kann als computerlesbarer Anweisungscode in jeder geeigneten Programmiersprache wie beispielsweise in JAVA oder C++ implementiert sein. Das Computerprogramm kann auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Der Anweisungscode kann einen Computer oder andere programmierbare Geräte wie ein Steuergerät derart programmieren, dass die gewünschten Funktionen ausgeführt werden. Ferner kann das Computerprogramm in einem Netzwerk wie beispielsweise dem Internet bereitgestellt werden bzw. sein, von dem es bei Bedarf von einem Nutzer heruntergeladen werden kann. Das Computerprogramm kann in Form von Software, oder in Form eines Computerprogrammprodukts mittels einer oder mehrerer spezieller elektronischer Schaltungen, d.h. in Hardware, oder in beliebig hybrider Form, d.h. mittels Software-Komponenten und Hardware-Komponenten, realisiert werden bzw. sein.

Gemäß einem weiteren Aspekt der vorliegenden Erfindung wird ein Speichermittel mit einem darauf gespeicherten Computerprogramm bereitgestellt, wobei das Computerprogramm zum Durchführen eines wie vorstehend beschriebenen Verfahrens konfiguriert und ausgestaltet ist. Damit bringt auch das erfindungsgemäße Speichermittel die vorstehend beschriebenen Vorteile mit sich. Unter dem Speichermittel kann ein Datenträger wie ein Speicherstift, auf welchem das Computerprogramm gespeichert ist, verstanden werden.

Darüber hinaus wird ein Steuergerät mit einem darauf installierten Computerprogramm, das zum Durchführen eines wie vorstehend beschriebenen Verfahrens konfiguriert und ausgestaltet ist, bereitgestellt. Auch das erfindungsgemäße Steuergerät bringt die vorstehend beschriebenen Vorteile mit sich. Das Steuergerät ist vorzugsweise Bestandteil einer Fahrzeugsteuerung bzw. eines Fahrzeug-Steuergeräts.

Darüber hinaus wird im Rahmen der vorliegenden Erfindung eine Kalibrierstrecke zur Verfügung gestellt. Vorzugsweise befindet sich die Kalibrierstrecke an einem Herstellungsort des Fahrzeugs. Die Kalibrierstrecke weist wenigstens eine vordefinierte Ortsinformation auf, anhand welcher wenigstens ein Positionssensor des Fahrzeugs durch ein wie vorstehend beschriebenes Verfahren kalibriert werden kann. Damit sind auch mittels der erfindungsgemäßen Kalibrierstrecke die vorstehend beschriebenen Vorteile erzielbar.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: ein Fahrzeug auf einer erfindungsgemäßen Kalibrierstrecke, und
- Figur 2: ein Flussdiagramm zum Erläutern eines Verfahrens gemäß einer bevorzugten Ausführungsform der vorliegenden Erfindung.

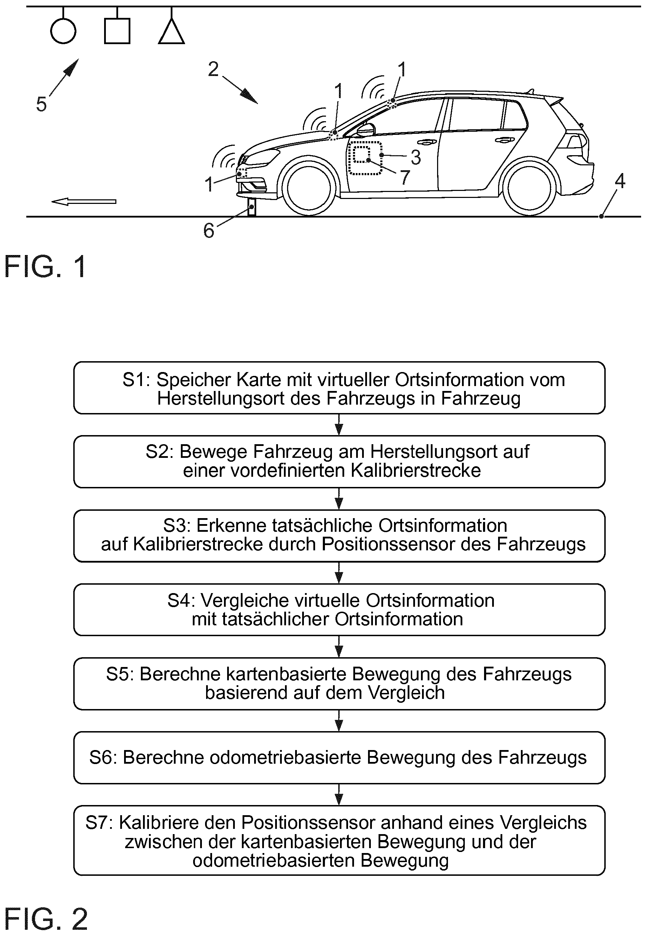

In Fig. 1 ist ein Fahrzeug 2 auf einer Kalibrierstrecke 4 an einem Herstellungsort des Fahrzeugs 2 dargestellt. Auf bzw. über der Kalibrierstrecke 4 sind verschiedene, vordefinierte Ortsinformationen 5 in Form von drei unterschiedlich ausgestalteten und voneinander beabstandeten Kalibriertafeln befestigt. Die Kalibriertafeln können demnach in Gravitationsrichtung über dem Fahrzeug 2 erkannt werden. Das in Fig. 1 dargestellte Fahrzeug 2 weist drei Positionssensoren 1 auf.

Das Fahrzeug 2 ist an einer Zugvorrichtung 6 befestigt, durch welche das Fahrzeug auf der Kalibrierstrecke 4 entlang einer vordefinierten Bahn gezogen werden kann. Das Fahrzeug weist ein Steuergerät 3 mit einem darauf installierten Computerprogramm 7 auf, das zum Durchführen eines später beschriebenen Verfahrens konfiguriert und ausgestaltet ist. Das Computerprogramm 7 umfasst entsprechend Befehle, die bei der Ausführung des Computerprogramms 7 durch einen Computer diesen veranlassen, das gewünschte Verfahren auszuführen. Das Computerprogramm 7 kann ferner auf einem separaten Speichermittel bereitgestellt sein.

Mit Bezug auf Fig. 2 wird anschließend ein Verfahren zur Kalibrierung der Positionssensoren 1 des Fahrzeugs 2 erläutert. Dabei wird von einem Fahrzeug ausgegangen, in welchem bereits Positionssensoren 1 verbaut sind.

Bei dem Verfahren wird in einem ersten Schritt S1 eine Karte in dem Fahrzeug 2 mit virtuellen Ortsinformationen vom Herstellungsort des Fahrzeugs 2 gespeichert. Die virtuellen Ortsinformationen umfassen die in Fig. 1 dargestellten Kalibriertafeln in digitaler Version. In einem zweiten Schritt S2 wird das Fahrzeug 2 mittels der Zugvorrichtung 6 auf der Kalibrierstrecke 4 auf einer vordefinierten Bahn bewegt bzw. gezogen. Anschließend werden in einem dritten Schritt S3 die tatsächlichen Ortsinformation 5 in Form der Kalibriertafeln durch die Positionssensoren 1 erkannt, während sich das Fahrzeug 2 auf der Kalibrierstrecke 4 in einem Gebäude auf dem Werksgelände des Herstellungsorts des Fahrzeugs 2 bewegt. Danach wird in einem vierten Schritt S4 ein Vergleich zwischen den virtuellen Ortsinformation und den erkannten tatsächlichen Ortsinformation 5 durchgeführt. Basierend auf dem Vergleich wird in einem fünften Schritt S5 eine kartenbasierte Bewegung des Fahrzeugs 2 innerhalb der gespeicherten Karte durchgeführt. In einem sechsten Schritt S6 wird eine odometriebasierten Bewegung des Fahrzeugs 2, also eine Bewegung des Fahrzeugs 2 anhand der Odometrie, berechnet. Anschließend können in einem siebten Schritt S7 die Positionssensoren 1 anhand eines Vergleichs zwischen der kartenbasierten Bewegung und der odometriebasierten Bewegung kalibriert werden.

Die Erfindung lässt neben den dargestellten Ausführungsformen weitere Gestaltungsgrundsätze zu. So müssen die in Fig. 2 dargestellten Schritte nicht wie dargestellt nacheinander ablaufen, sondern können auch in einer anderen Reihenfolge und/oder gleichzeitig erfolgen.

Die Positionssensoren 1 werden vorzugsweise anhand des Vergleichs zwischen der kartenbasierten Bewegung und der odometriebasierten Bewegung zumindest abschnittsweise gleichzeitig kalibriert. Die Kalibrierung kann iterativ über eine Mehrzahl von Vergleichen zwischen der kartenbasierten Bewegung und der odometriebasierten Bewegung durchgeführt werden. Dabei werden mit statistischen Methoden Fehler über eine Vielzahl von Messungen beobachtet und ausgewertet. Die ermittelten Fehler können auf einem Speicher im Fahrzeug 2, beispielsweise auf einem Speicher eines Kamerasystems des Fahrzeugs 2, als entsprechende Parameter hinterlegt und für weitere Berechnungen verwendet werden.

### Bezugszeichenliste

- 1: Sensor
- 2: Fahrzeug
- 3: Steuergerät
- 4: Kalibrierstrecke
- 5: Ortsinformation
- 6: Zugvorrichtung
- 7: Computerprogramm

## Patentansprüche

1. Verfahren zur Kalibrierung wenigstens eines Positionssensors (1) in einem Fahrzeug (2), aufweisend die Schritte:
- Speichern einer Karte in dem Fahrzeug (2) mit wenigstens einer virtuellen Ortsinformation aus der Umgebung einer vordefinierten Kalibrierstrecke (4), wobei die virtuelle Ortsinformation eine digitale, in dem Fahrzeug (2) abgespeicherte Ortsinformation ist,
- Bewegen des Fahrzeugs (2) auf der vordefinierten Kalibrierstrecke (4),
- Erkennen wenigstens einer tatsächlichen Ortsinformation (5) durch den wenigstens einen Positionssensor (1), während sich das Fahrzeug (2) auf der vordefinierten Kalibrierstrecke (4) bewegt, wobei der wenigstens eine Positionssensor (1) als Kamerasensor eines Kamerasystems des Fahrzeugs (2) oder als Abstandssensor ausgebildet ist und die tatsächliche Ortsinformation eine physische Ortsinformation ist, die durch den wenigstens einen Positionssensor (1) tatsächlich erkannt und/oder gemessen werden kann,
- Durchführen eines Vergleichs zwischen der wenigstens einen virtuellen Ortsinformation und der wenigstens einen tatsächlichen Ortsinformation (5),
- Berechnen einer kartenbasierten Bewegung des Fahrzeugs (2) innerhalb der gespeicherten Karte basierend auf dem Vergleich,
- Berechnen einer odometriebasierten Bewegung des Fahrzeugs (2), und
- Kalibrierung des wenigstens einen Positionssensors (1) anhand eines Vergleichs zwischen der kartenbasierten Bewegung und der odometriebasierten Bewegung,
**dadurch gekennzeichnet,**
**dass** sich die vordefinierte Kalibrierstrecke (4) am Herstellungsort des Fahrzeugs (2) befindet und das Fahrzeug (2) während seiner Fertigung auf der vordefinierten Kalibrierstrecke (4) bewegt wird, wobei das Fahrzeug (2) ohne Person zum Fahren und/oder Bewegen des Fahrzeugs (2) mit einer Zugvorrichtung (6) auf der vordefinierten Kalibrierstrecke (4) gezogen wird, wobei als Ortsinformationen Gegenstände und/oder Umgebungsmerkmale am Herstellungsort und/oder auf der Fertigungsstrecke des Fahrzeugs dienen und wobei die tatsächliche Ortsinformation und die virtuelle Ortsinformation in Form von Objekten auf oder an der Kalibrierstrecke (4) ausgebildet sind, insbesondere in Form von Kalibrierschildern oder -tafeln.

2. Verfahren nach Anspruch 1,
**dadurch gekennzeichnet,**
**dass** die wenigstens eine tatsächliche Ortsinformation (5) in Gravitationsrichtung über dem Fahrzeug (2) erkannt wird.

3. Verfahren nach einem der voranstehenden Ansprüche,
**dadurch gekennzeichnet,**
**dass** das Fahrzeug (2) auf der vordefinierten Kalibrierstrecke (4) zumindest teilweise innerhalb eines Gebäudes bewegt wird.

4. Verfahren nach einem der voranstehenden Ansprüche,
**dadurch gekennzeichnet,**
**dass** die Kalibrierung iterativ über eine Mehrzahl von Vergleichen zwischen der kartenbasierten Bewegung und der odometriebasierten Bewegung durchgeführt wird.

5. Verfahren nach einem der voranstehenden Ansprüche,
**dadurch gekennzeichnet,**
**dass** die kamerabasierte Bewegung des Fahrzeugs (2) mittels mehrerer Positionssensoren (1) berechnet wird und die Positionssensoren (1) anhand eines Vergleichs zwischen der kartenbasierten Bewegung und der odometriebasierten Bewegung gleichzeitig kalibriert werden.

6. Computerprogramm (7), umfassend Befehle, die bei der Ausführung des Computerprogramms (7) durch einen Computer diesen veranlassen, das Verfahren nach einem der Ansprüche 1 bis 5 auszuführen.

7. Speichermittel mit einem darauf gespeicherten Computerprogramm (7), das zum Durchführen eines Verfahrens nach einem der Ansprüche 1 bis 5 konfiguriert und ausgestaltet ist.

8. Steuergerät (3) mit einem darauf installierten Computerprogramm (7), das zum Durchführen eines Verfahrens nach einem der Ansprüche 1 bis 5 konfiguriert und ausgestaltet ist.

9. Kalibrierstrecke (4) zum Kalibrieren eines Fahrzeugs (2), aufweisend wenigstens eine vordefinierte Ortsinformation (5), anhand welcher wenigstens ein Positionssensor (1) des Fahrzeugs (2) durch ein Verfahren nach einem der Ansprüche 1 bis 5 kalibriert werden kann.

## Claims

1. Method for calibrating at least one position sensor (1) in a vehicle (2), comprising the steps of:
- storing in the vehicle (2) a map having at least one piece of virtual location information from the surroundings of a predefined calibration route (4), the virtual location information being digital location information stored in the vehicle (2),
- moving the vehicle (2) on the predefined calibration route (4),
- detecting at least one piece of actual location information (5) by means of the at least one position sensor (1) while the vehicle (2) is moving on the predefined calibration route (4), the at least one position sensor (1) being designed as a camera sensor of a camera system of the vehicle (2) or as a distance sensor, and the piece of actual location information being a piece of physical location information which can actually be detected and/or measured by the at least one position sensor (1),
- performing a comparison between the at least one piece of virtual location information and the at least one piece of actual location information (5),
- calculating a map-based movement of the vehicle (2) within the stored map based on the comparison,
- calculating an odometry-based movement of the vehicle (2), and
- calibrating the at least one position sensor (1) using a comparison between the map-based movement and the odometry-based movement,
**characterized in that**
the predefined calibration route (4) is located at the place of manufacture of the vehicle (2) and the vehicle (2) is moved on the predefined calibration route (4) during its manufacture, the vehicle (2) being towed on the predefined calibration route (4) by means of a towing device (6) without a person to drive and/or move the vehicle (2), objects and/or features of surroundings at the place of manufacture and/or on the production line of the vehicle serving as location information, and the actual location information and the virtual location information being in the form of objects on the calibration route (4), in particular in the form of calibration signs or panels.

2. Method according to claim 1,
**characterized in that**
the at least one piece of actual location information (5) is detected in the gravitational direction above the vehicle (2).

3. Method according to either of the preceding claims,
**characterized in that**
the vehicle (2) is moved on the predefined calibration route (4) at least partially within a building.

4. Method according to any of the preceding claims,
**characterized in that**
the calibration is performed iteratively over a number of comparisons between the map-based movement and the odometry-based movement.

5. Method according to any of the preceding claims,
**characterized in that**
the camera-based movement of the vehicle (2) is calculated by means of a plurality of position sensors (1) and the position sensors (1) are calibrated simultaneously based on a comparison between the map-based movement and the odometry-based movement.

6. Computer program (7) comprising commands which, when the computer program (7) is executed by a computer, cause the computer to execute the method according to any of claims 1 to 5.

7. Storage means having a computer program (7) stored thereon which is configured and designed to carry out a method according to any of claims 1 to 5.

8. Controller (3) having a computer program (7) installed thereon which is configured and designed to carry out a method according to any of claims 1 to 5.

9. Calibration route (4) for calibrating a vehicle (2), having at least one piece of predefined location information (5), by means of which at least one position sensor (1) of the vehicle (2) can be calibrated by a method according to any of claims 1 to 5.

## Revendications

1. Procédé pour l'étalonnage d'au moins un capteur de position (1) dans un véhicule (2), comprenant les étapes de :
- mémorisation d'une carte dans le véhicule (2) comportant au moins une information de lieu virtuelle provenant de l'environnement d'un trajet d'étalonnage (4) prédéfini, dans lequel l'information de lieu virtuelle est une information de lieu numérique mémorisée dans le véhicule (2),
- déplacement du véhicule (2) sur le trajet d'étalonnage (4) prédéfini,
- reconnaissance d'au moins une information de lieu (5) réelle par l'au moins un capteur de position (1), pendant que le véhicule (2) se déplace sur le trajet d'étalonnage (4) prédéfini, dans lequel l'au moins un capteur de position (1) est réalisé sous la forme d'un capteur de caméra d'un système de caméra du véhicule (2) ou sous la forme d'un capteur de distance et l'information de lieu réelle est une information de lieu physique, qui peut être réellement reconnue et/ou mesurée par l'au moins un capteur de position (1),
- réalisation d'une comparaison entre l'au moins une information de lieu virtuelle et l'au moins une information de lieu (5) réelle,
- calcul d'un déplacement basé sur la carte du véhicule (2) au sein de la carte mémorisée, sur la base de la comparaison,
- calcul d'un déplacement basé sur l'odométrie du véhicule (2) et
- étalonnage de l'au moins un capteur de position (1) à l'aide d'une comparaison entre le déplacement basé sur la carte et le déplacement basé sur l'odométrie,
**caractérisé en ce que**
le trajet d'étalonnage (4) prédéfini se trouve au niveau du lieu de fabrication du véhicule (2) et le véhicule (2) est déplacé pendant sa fabrication sur le trajet d'étalonnage (4) prédéfini, dans lequel le véhicule (2) est tracté sans personne pour conduire et/ou déplacer le véhicule (2) avec un dispositif de traction (6) sur le trajet d'étalonnage (4) prédéfini, dans lequel des objets et/ou caractéristiques d'environnement sur le lieu de fabrication et/ou sur le trajet de fabrication du véhicule servent d'informations de lieu et dans lequel l'information de lieu réelle et l'information de lieu virtuelle sont réalisées sous la forme d'objets sur ou le long du trajet d'étalonnage (4), en particulier sous la forme de plaques ou de panneaux d'étalonnage.

2. Procédé selon la revendication 1,
**caractérisé en ce que**
l'au moins une information de lieu (5) réelle est reconnue dans la direction de la gravité au-dessus du véhicule (2).

3. Procédé selon l'une des revendications précédentes,
**caractérisé en ce que**
le véhicule (2) est déplacé sur le trajet d'étalonnage (4) prédéfini au moins partiellement à l'intérieur d'un bâtiment.

4. Procédé selon l'une des revendications précédentes,
**caractérisé en ce que**
l'étalonnage est réalisé de manière itérative par l'intermédiaire d'une pluralité de comparaisons entre le déplacement basé sur la carte et le déplacement basé sur l'odométrie.

5. Procédé selon l'une des revendications précédentes,
**caractérisé en ce que**
le déplacement basé sur la caméra du véhicule (2) est calculé à l'aide de plusieurs capteurs de position (1) et les capteurs de position (1) sont étalonnés concomitamment au moyen d'une comparaison entre le déplacement basé sur la carte et le déplacement basé sur l'odométrie.

6. Programme informatique (7), comprenant des instructions qui, lors de l'exécution du programme informatique (7) par un ordinateur, amènent celui-ci à exécuter le procédé selon l'une des revendications 1 à 5.

7. Support de stockage comportant un programme informatique (7) mémorisé sur ce dernier, qui est configuré et conçu pour la réalisation d'un procédé selon l'une des revendications 1 à 5.

8. Appareil de commande (3) comportant un programme informatique (7) installé sur ce dernier, qui est configuré et conçu pour la réalisation d'un procédé selon l'une des revendications 1 à 5.

9. Trajet d'étalonnage (4) pour l'étalonnage d'un véhicule (2), présentant au moins une information de lieu (5) prédéfinie, à l'aide de laquelle au moins un capteur de position (1) du véhicule (2) peut être étalonné par un procédé selon l'une des revendications 1 à 5.
